# EUROPEAN PATENT APPLICATION

(11) **EP 4 734 263 A1**
(43) Date of publication of application: **29.04.2026**
(21) Application number: 25810016.3
(22) Date of filing: 02.05.2025
(51) Int. Cl.: H01M 50/383, H01M 50/273, H01M 50/291, H01M 50/293, H01M 10/6556, H01M 10/613

(54) **BATTERY DEVICE**

(30) Priority: 08.05.2024 KR 20240060532
(71) Applicant: LG Energy Solution, Ltd., Seoul 07335 (KR)
(72) Inventor: BYUN, Jae Beom, Daejeon 34122 (KR); LEE, Jae Hyun, Daejeon 34122 (KR); LIM, Chae Won, Daejeon 34122 (KR); KIM, Jin Hyuk, Daejeon 34122 (KR); LEE, Sang Ouk, Daejeon 34122 (KR)
(74) Representative: Plasseraud IP
(86) International application number: PCT/KR2025/005986
(87) International publication number: WO 2025/234698

(57) **Abstract**

The present invention provides a battery device comprising: a housing including a base frame and a top frame; a plurality of battery cells disposed on the base frame; a top pad covering the plurality of battery cells and in contact with the plurality of battery cells; and a flame blocking cover attached to the top pad and spaced apart from the top frame with a venting space therebetween.

## Description

### [Technical Field]

The present disclosure relates to a battery device.

This application claims the benefit of Korean Patent Application No. 10-2024-0060532, filed on May 08, 2024, the disclosure of which is incorporated herein by reference.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has decreased dramatically. As the range of battery electric vehicles (BEVs) has increased to levels comparable to fuel vehicles, the primary use of secondary batteries is shifting from mobile devices to mobility.

As secondary batteries are used in mobility applications, the demand for their safety has increased. If accidents such as fires occur in secondary batteries used in mobility, they can endanger the life of the driver. Therefore, research on technologies to enhance the safety of secondary batteries is indispensable.

### [Summary]

### [Technical Problem]

The technical problem that the present disclosure aims to solve is to provide a battery device.

### [Technical Solution]

To solve the aforementioned problems, the technical concept of the present disclosure provides a battery device including: a housing including a base frame and a top frame; a plurality of battery cells disposed on the base frame; a top pad covering the plurality of battery cells and contacting the plurality of battery cells; and a flame-retardant cover attached onto the top pad and spaced apart from the top frame with a venting space in between.

In exemplary embodiments, the flame-retardant cover includes a support frame comprising a plurality of venting holes, wherein the top pad covers the plurality of venting holes of the support frame.

In exemplary embodiments, the flame-retardant cover further includes a thermal barrier sheet coupled to the support frame to cover the plurality of venting holes of the support frame.

In exemplary embodiments, the thermal barrier sheet is interposed between the support frame and the top pad.

In exemplary embodiments, the top pad includes silicon or polyurethane.

In exemplary embodiments, the plurality of battery cells each includes a cell case including a main body part accommodating an electrode assembly and a sealing part extending from the main body part, wherein the top pad contacts the sealing part of the cell case of each of the plurality of battery cells.

In exemplary embodiments, the housing further includes a pair of inner walls spaced apart and the plurality of battery cells are located between the pair of inner walls, wherein the flame-retardant cover is coupled to the pair of inner walls.

In exemplary embodiments, the battery device further includes a side pad disposed between adjacent battery cells among the plurality of battery cells, wherein the top pad contacts the side pad.

In exemplary embodiments, the plurality of battery cells is arranged in a first direction, wherein the contact between the upper surface of the side pad and the top pad is continuous in a second direction intersecting the first direction.

In exemplary embodiments, the side pad includes: a lower pad disposed between adjacent battery cells among the plurality of battery cells; and an upper pad disposed on the lower pad and in contact with the top pad.

In exemplary embodiments, the top pad includes a protruding part protruding toward the side pad, wherein the bottom surface of the protruding part of the top pad contacts the upper surface of the side pad.

In exemplary embodiments, the top pad includes a groove into which the side pad is inserted.

In exemplary embodiments, the material of the top pad and the material of the side pad are the same.

In exemplary embodiments, the base frame includes a cooling channel configured to allow a cooling fluid to flow.

In exemplary embodiments, the plurality of battery cells is arranged in a first direction, wherein the housing further includes a pair of inner walls spaced apart and the plurality of battery cells are located between the pair of inner walls, wherein the flame-retardant cover includes: a support frame coupled to the pair of inner walls and comprising a plurality of venting holes; and a thermal barrier sheet connected to the support frame to cover the plurality of venting holes in the frame, wherein the top pad is attached to the flame-retardant cover to cover the plurality of venting holes in the support frame.

### [Advantageous Effects]

According to exemplary embodiments of the present disclosure, the top pad contacts the cell case of each of a plurality of battery cells, thereby blocking or suppressing the lateral flow of high-temperature gas and/or flames generated from a combusted battery cell through the space beneath the flame-retardant cover. Therefore, even when a combusted battery cell exists within the housing, heat transfer to normal, non-combusted battery cells can be prevented or suppressed.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a cross-sectional view showing a battery device according to exemplary embodiments of the present disclosure.
FIG. 2 is a cross-sectional view showing a portion of the battery device of FIG. 1.
FIG. 3 is a cross-sectional view showing a venting path within the battery device according to exemplary embodiments of the present disclosure.
FIG. 4 is a cross-sectional view showing a portion of the battery device according to exemplary embodiments of the present disclosure.
FIG. 5 is a cross-sectional view showing a portion of the battery device according to exemplary embodiments of the present disclosure.
FIG. 6 is a cross-sectional view showing a portion of the battery device according to exemplary embodiments of the present disclosure.
FIG. 7 is a cross-sectional view showing a portion of the battery device according to exemplary embodiments of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

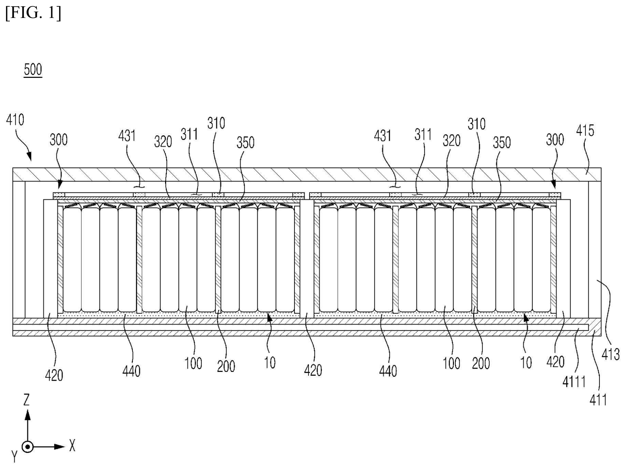

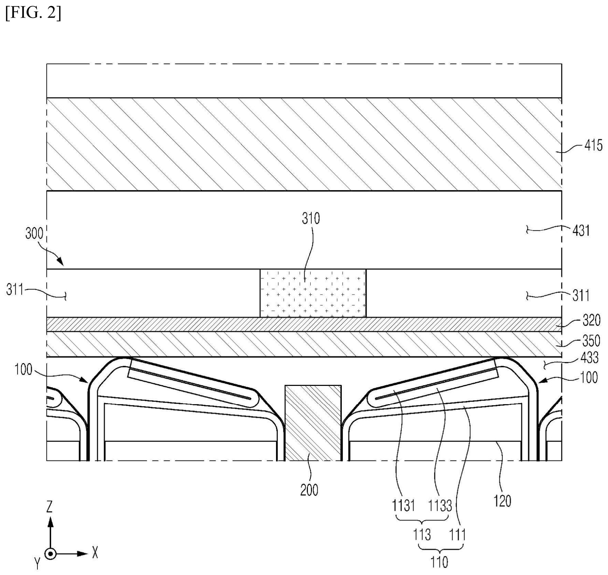

FIG. 1 is a cross-sectional view showing a battery device 500 according to exemplary embodiments of the present disclosure. FIG. 2 is a cross-sectional view showing a portion of the battery device 500 of FIG. 1.

Referring to FIGS. 1 and 2, the battery device 500 may include a housing 410, a plurality of cell assemblies 10, a flame-retardant cover 300, and a top pad 350. The battery device 500 may correspond to a battery pack or battery module.

The housing 410 may provide an internal space for accommodating the plurality of cell assemblies 10. The internal space of the housing 410 may accommodate the plurality of cell assemblies 10. The housing 410 may include a base frame 411, a side frame 413, and a top frame 415.

The base frame 411 may support the plurality of cell assemblies 10. The base frame 411 may have a plate-like shape extending in a first horizontal direction (e.g., X-direction) and a second horizontal direction (e.g., Y-direction).

The base frame 411 may include a cooling channel 4111 configured for cooling fluid to flow. Cooling fluid provided externally to the base frame 411 may be supplied to an inlet of the cooling channel 4111, flow along the cooling channel 4111, and be discharged externally through an outlet of the cooling channel 4111. While the cooling fluid flows through the cooling channel 4111, cooling of the cell assembly 10 may occur. The cooling fluid may include coolant and/or refrigerant.

The side frame 413 may extend along the perimeter of the base frame 411 and may enclose the cell assembly 10.

The top frame 415 may be fastened atop the side frame 413 to cover a plurality of cell assemblies 10. The top frame 415 may have a plate-like shape extending in a first horizontal direction (e.g., X-direction) and a second horizontal direction (e.g., Y-direction).

The housing 410 may include a plurality of inner walls 420 provided on the base frame 411. The plurality of inner walls 420 may compartmentalize the internal space of the housing 410 into a plurality of accommodation spaces 433. One or more cell assemblies 10 may be disposed within each of the plurality of accommodation spaces 433 of the housing 410 defined by the plurality of inner walls 420. In exemplary embodiments, the plurality of inner walls 420 may be spaced apart from each other in a first horizontal direction (e.g., X-direction), and each individual inner wall 420 may extend in a second horizontal direction (e.g., Y-direction). A single cell assembly 10 may be disposed between a pair of inner walls 420.

The plurality of cell assemblies 10 may be arranged on the base frame 411 in the first horizontal direction (e.g., X-direction) and/or the second horizontal direction (e.g., Y-direction). Each cell assembly 10 may include a plurality of battery cells 100 and at least one side pad 200.

Each battery cell 100 is a lithium-ion battery, i.e., the basic unit of a secondary battery. Each battery cell 100 may include an electrode assembly, an electrolyte, and a cell case 110. The electrode assembly incorporated within the cell case 110 may include a positive electrode, a negative electrode, and a separator interposed between the positive and negative electrodes. The electrode assembly may be either a jelly-roll type or a stack-type, depending on the assembly configuration. A jelly-roll type electrode assembly may include a wound structure of a positive electrode, a negative electrode, and a separator interposed between them. A stack-type electrode assembly may include a plurality of positive electrodes, a plurality of negative electrodes, and a plurality of separators interposed between them, sequentially stacked. The positive electrode may include a positive electrode current collector and a positive electrode active material. The negative electrode may include a negative electrode current collector and a negative electrode active material.

The cell case 110 may be manufactured from a laminate sheet. The laminate sheet may have a multilayer structure including a resin layer. To manufacture a cell case 110 having a storing space storing an electrode assembly 120, a laminate sheet having a first portion with the storing space and a second portion connected to the first portion may be prepared, and the outer periphery part of the first portion of the laminate sheet and the outer periphery part of the second portion of the laminate sheet may be heat-sealed.

The cell case 110 may include a main body part 111 having a storing space in which the electrode assembly 120 is stored, and a sealing part 113 extending outward from the main body part 111. The sealing part 113 may extend along the perimeter of the main body part 111. The sealing part 113 may include a conjugate formed by heat-sealing the first portion and the second portion of the laminate sheet described above.

The sealing part 113 may include a folding part formed by a folding process. The sealing part 113 may include a first folding part 1131 extended from the main body part 111 and folded in the first rotational direction, and a second folding part 1133 folded from the first folding part 1131 in the first rotational direction, which is the folding direction of the first folding part 1131. The first folding part 1131 may extend between the edge of the main body part 111 and the second folding part 1133. The second folding part 1133 may be attached entirely to the first folding part 1131. The second folding part 1133 may face one surface of the main body part 111, and the second folding part 1133 may be located between the first folding part 1131 and the one surface of the main body part 111. To form the sealing part 113, the first portion and second portion of the laminate sheet are bonded by heat fusion to form a conjugate. Subsequently, a first folding process may be performed to fold a portion of the conjugate in the first rotational direction, and a second folding process may be performed to fold another portion of the conjugate in the first rotational direction. Through the two folding processes, the sealing part 113 is folded such that the second folding part 1133 faces one surface of the main body part 111, and a space can be formed between the second folding part 1133 and the one surface of the main body part 111. Because the sealing part 113 has a folding structure, the sealing force of the cell case 110 can be enhanced. The sealing part 113 can be fixed to the main body part 111 via a fixing member such as tape.

Each battery cell 100 may correspond to a pouch-type battery cell, a cylindrical battery cell, or a prismatic battery cell. The electrode assembly of a pouch-type battery cell is embedded within a pouch case including an aluminum laminate sheet. The electrode assembly of a cylindrical battery cell is embedded within a cylindrical metal can. The electrode assembly of a prismatic battery cell is embedded within a prismatic metal can.

The plurality of battery cells 100 provided in the cell assembly 10 may be connected in series and/or in parallel. For example, the plurality of battery cells 100 may be connected in series with each other. For example, the plurality of battery cells 100 may also be connected in parallel with each other. For example, when defining a set of two or more battery cells 100 connected in parallel as a bank, one bank composed of two or more battery cells 100 connected in parallel and another bank composed of two or more battery cells 100 connected in parallel can be connected in series.

In exemplary embodiments, the plurality of battery cells 100 provided in the cell assembly 10 may be arranged in a first horizontal direction (e.g., X-direction), and each battery cell 100 may extend in a second horizontal direction (e.g., Y-direction). Electrode leads may be provided at the ends of the individual battery cells 100 along the second horizontal direction (e.g., Y-direction). The electrode leads of adjacent battery cells 100 among the plurality of battery cells 100 may be electrically and physically connected to each other.

A side pad 200 may be disposed between the battery cells 100. The side pad 200 may have a plate-like shape extending substantially in the second horizontal direction (e.g., Y-direction) and the vertical direction (e.g., Z-direction). Both sides of the side pad 200 may each contact a battery cell 100. The side pad 200 may be attached to an adjacent battery cell 100 by an adhesive member such as tape. Each cell assembly 10 may include a plurality of side pads 200. At least one battery cell 100 may be disposed between an adjacent pair of side pads 200. In exemplary embodiments, a plurality of battery cells 100 forming a bank may be disposed between an adjacent pair of side pads 200.

The side pad 200 may closely adhere to the side part of the battery cell 100 to support the battery cell 100. The side pad 200 may be configured to elastically deform under external force to support the corresponding battery cell 100. When an external force is applied to the side pad 200 in a first horizontal direction (e.g., X-direction), the thickness of the side pad 200 in the first horizontal direction (e.g., X-direction) may decrease from an initial thickness. Furthermore, when the external force is released from the side pad 200, the thickness of the side pad 200 in the first horizontal direction (e.g., X-direction) may return to the initial thickness. When the thickness of the battery cell 100 in the first horizontal direction (e.g., X-direction) increases due to swelling of the battery cell 100, the side pad 200 elastically deforms, thereby absorbing or distributing the force exerted by swelling of the corresponding battery cell 100.

Additionally, the side pad 200 may include a material with excellent heat resistance. The side pad 200, disposed between two battery cells 100, can prevent or suppress thermal propagation between the two battery cells 100.

In exemplary embodiments, the side pad 200 may include polyurethane, silicon, or a combination thereof.

In exemplary embodiments, a thermally conductive adhesive layer 440 may be interposed between each cell assembly 10 and the thermally conductive adhesive layer 440. Each cell assembly 10 may be thermally and physically coupled to the base frame 411 by the thermally conductive adhesive layer 440. The thermally conductive adhesive layer 440 may be attached to the bottom surface of the battery cells 100. The thermally conductive adhesive layer 440 may include a thermal interface material or a thermal resin.

A flame-retardant cover 300 may cover the cell assembly 10. The flame-retardant cover 300 may have a flat plate shape extending in a first horizontal direction (e.g., X-direction) and a second horizontal direction (e.g., Y-direction). Y-direction). The flame-retardant cover 300 may be coupled to a pair of inner walls 420 and may cover the cell assembly 10 disposed between the pair of inner walls 420. For example, the flame-retardant cover 300 may be fastened to the pair of inner walls 420 by a fastening member such as bolts. The flame-retardant cover 300 may be spaced apart from the top frame 415 with a venting space 431 in between. The venting space 431 may be part of the internal space of the housing 410. In cross-section, the venting space 431 may extend continuously over all battery cells 100 of each individual cell assembly 10. The flame-retardant cover 300 covers the cell assembly 10, preventing high-temperature gas and flames flowing along the venting space 431 from penetrating into the cell assembly 10.

The flame-retardant cover 300 may include a support frame 310 and a thermal barrier sheet 320.

The support frame 310 may support the thermal barrier sheet 320. The support frame 310 may include a plurality of venting holes 311. The plurality of venting holes 311 may penetrate the support frame 310 in a vertical direction (e.g., Z-direction). The plurality of venting holes 311 may each overlap at least one battery cell 100 in the vertical direction (e.g., Z-direction). The support frame 310 may include a material with high strength, such as a metal. In exemplary embodiments, the elastic modulus of the support frame 310 may be greater than the elastic modulus of the side pad 200.

The thermal barrier sheet 320 may be coupled to the support frame 310. The thermal barrier sheet 320 may be a single sheet or a single piece. The thermal barrier sheet 320 may be attached to one surface of the support frame 310 to cover a plurality of venting holes 311 in the support frame 310. The thermal barrier sheet 320 may close one side of each of the plurality of venting holes 311 of the support frame 310, thereby preventing the space accommodating the battery cells 100 from communicating with the venting space 431. However, the thermal barrier sheet 320 may be configured to rupture under the pressure of the space in which the battery cells 100 are accommodated, allowing gas flow between the space accommodating the battery cells 100 and the venting space 431. In FIG. 1, the thermal barrier sheet 320 is illustrated attached to the bottom surface of the support frame 310, but the thermal barrier sheet 320 may also be attached to the upper surface of the support frame 310. The thermal barrier sheet 320 covers a plurality of venting holes 311 in the support frame 310, preventing high-temperature gas and flames flowing along the venting space 431 from penetrating into the cell assembly 10.

The thermal barrier sheet 320 may include heat-resistant materials, fire-resistant materials, and/or heat-resistant materials. In exemplary embodiments, the thermal barrier sheet 320 may include at least one of a high heat-resistant resin, glass fiber, fiber reinforced plastic, compressed fiber, and fiber refractory insulation.

The thermal barrier sheet 320 may be configured to rupture when the pressure in the accommodation space 433 beneath the flame-retardant cover 300 exceeds a certain level due to high-temperature gas generated from the battery cell 100. Upon rupture of the thermal barrier sheet 320, gas from the accommodation space 433 can be discharged into the venting space 431 through the venting holes 311 of the support frame 310 overlapping the ruptured portion of the thermal barrier sheet 320.

The top pad 350 may be disposed between the flame-retardant cover 300 and the cell assembly 10, and may cover a plurality of battery cells 100. The top pad 350 may have a plate-like shape extending in a first horizontal direction (e.g., X-direction) and a second horizontal direction (e.g., Y-direction). The top pad 350 may be attached to the bottom surface of the flame-retardant cover 300 by an adhesive member such as double-sided tape. The support frame 310 may support the top pad 350 to prevent or suppress deformation of the top pad 350 due to high temperature and high pressure. In exemplary embodiments, the thermal barrier sheet 320 may be interposed between the flame-retardant cover 300 and the top pad 350. In some exemplary embodiments, the thermal barrier sheet 320 may be attached to the upper surface of the flame-retardant cover 300, and the support frame 310 may be interposed between the thermal barrier sheet 320 and the top pad 350.

The top pad 350 may be attached to the flame-retardant cover 300 to cover a plurality of venting holes 311 in the support frame 310 of the flame-retardant cover 300. The top pad 350 may close one side of each of the plurality of venting holes 311 of the support frame 310, thereby preventing the space accommodating the battery cells 100 from communicating with the venting space 431. However, the top pad 350 may be configured to rupture in response to pressure within the space accommodating the battery cells 100, thereby allowing gas flow between the space accommodating the battery cells 100 and the venting space 431.

In exemplary embodiments, the thickness of the top pad 350 may be between 0.1 mm and 5 mm, between 0.3 mm and 4 mm, between 0.5 mm and 3 mm, or between 0.7 mm and 2 mm. The thickness of the top pad 350 may be the same or similar to the thickness of the thermal barrier sheet 320.

In exemplary embodiments, the top pad 350 may possess a certain level of elasticity or higher. In exemplary embodiments, the elastic modulus of the top pad 350 may be less than the elastic modulus of the support frame 310.

In exemplary embodiments, the top pad 350 may include polyurethane, silicon, or a combination thereof. In exemplary embodiments, the material of the top pad 350 may be the same as the material of the side pad 200. In exemplary embodiments, the material of the top pad 350 may be different from the material of the side pad 200.

The top pad 350 may contact the cell case 110 of each of the plurality of battery cells 100. More specifically, the top pad 350 may contact the sealing part 113 of the cell case 110 of each of the plurality of battery cells 100. When the top pad 350 contacts the cell case 110 of each of the plurality of battery cells 100, it can prevent high-temperature gas and/or flames from flowing in the space below the flame-retardant cover 300.

The top pad 350 and thermal barrier sheet 320 may be configured to rupture when the pressure in the accommodation space 433 beneath the flame-retardant cover 300 exceeds a certain level due to high-temperature gas generated from the battery cell 100. Upon rupture of the top pad 350 and thermal barrier sheet 320, high-temperature gas generated from the battery cell 100 can be discharged through the venting holes 311 of the support frame 310 overlapping the ruptured portions of the top pad 350 and thermal barrier sheet 320 into the venting space 431.

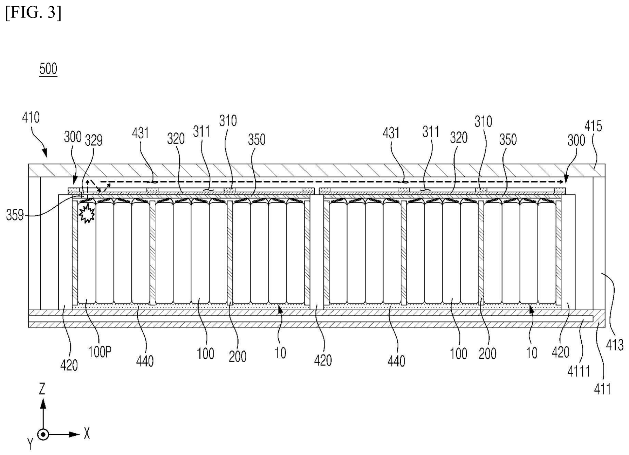

FIG. 3 is a cross-sectional view illustrating the venting path within a battery device 500 according to exemplary embodiments of the present disclosure. In FIG. 3, the path of movement of high-temperature gas and/or flame generated from the ignited battery cell 100P is indicated by a dashed line.

Referring to FIG. 3, when the pressure around the ignited battery cell 100P caused by the high-temperature gas and/or flame generated from the ignited battery cell 100P exceeds a certain level, the top pad 350 and thermal barrier sheet 320 surrounding the ignited battery cell 100P may rupture. The high-temperature gas and/or flame ignited from the ignited battery cell 100P may flow into the venting space 431 provided between the flame-retardant cover 300 and the top frame 415 through the ruptured portion 359 of the top pad 350, the ruptured portion 329 of the thermal barrier sheet 320 and the venting holes 311 of the support frame 310, and can flow laterally along the venting space 431 toward the side part of the housing 410. The high-temperature gas and/or flame can be discharged to the outside of the housing 410 through an exhaust port or venting device (e.g., relief valve) provided on the side part of the housing 410. The remaining portion of the top pad 350 excluding the ruptured portion 359, and the remaining portion of the thermal barrier sheet 320 excluding the ruptured portion 329 cover the non-ignited normal battery cells 100, thereby preventing the flow of high-temperature gas and/or flame within the venting space 431 to the normal battery cells 100.

As shown in FIG. 3, the top pad 350 contacts the cell case 110 of each of the plurality of battery cells 100, thereby blocking or suppressing the flow of high-temperature gas and/or flame generated from the ignited battery cell 100P laterally through the space beneath the flame-retardant cover 300. Thus, even when a ignited battery cell 100P exists within the housing 410, heat transfer to normal, non-ignited battery cells 100 can be prevented or suppressed.

### (Second embodiment)

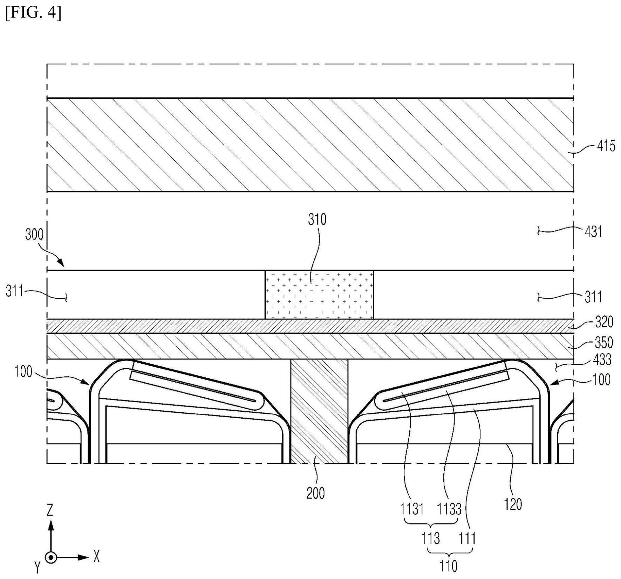

FIG. 4 is a cross-sectional view showing a portion of a battery device according to exemplary embodiments of the present disclosure. Hereinafter, the battery device shown in FIG. 4 will be described, focusing on the differences from the battery device 500 described with reference to FIGS. 1 and 2.

Referring to FIG. 4, the top pad 350 may be in contact with the side pad 200. The contact between the side pad 200 and the top pad 350 may be continuous in a second horizontal direction (e.g., Y-direction). The contact between the side pad 200 and the top pad 350 may be a surface contact. The upper surface of the side pad 200 may contact the top pad 350 such that no gap is formed between the side pad 200 and the top pad 350. The side pad 200, by contacting the top pad 350, can block or suppress the lateral flow of high-temperature gas and/or flame from the space below the top pad 350.

In exemplary embodiments, the side pad 200 can be attached to the top pad 350. In exemplary embodiments, the side pad 200 may be attached to the top pad 350 by an adhesive member, such as double-sided tape, interposed between the upper surface of the side pad 200 and the top pad 350.

In exemplary embodiments, the side pad 200 and the top pad 350 may include a material having elasticity above a certain level. In this case, the contact between the side pad 200 and the top pad 350 can be stably maintained by the restoring force of the side pad 200 and the restoring force of the top pad 350.

### (Third embodiment)

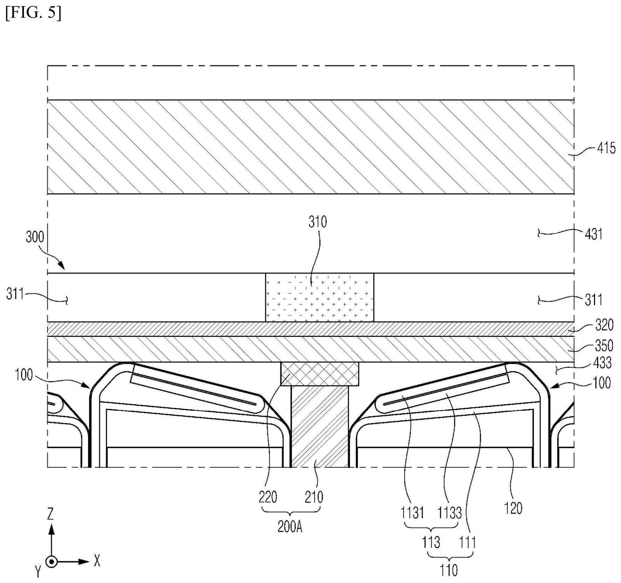

FIG. 5 is a cross-sectional view showing a portion of a battery device according to exemplary embodiments of the present disclosure. Herein, the battery device shown in FIG. 5 will be described, focusing on the differences from the battery device described with reference to FIG. 4.

Referring to FIG. 5, the side pad 200A may include a lower pad 210 and an upper pad 220. The lower pad 210 may be disposed between the battery cells 100. The lower pad 210 contacts the side of the battery cell 100 and may support the battery cell 100. The upper pad 220 may be disposed on top of the lower pad 210. The upper pad 220 may be disposed between the lower pad 210 and the top pad 350. The upper pad 220 may contact both the lower pad 210 and the top pad 350. The upper pad 220 may extend along the upper surface of the lower pad 210 in a second horizontal direction (e.g., Y-direction). The contact between the upper pad 220 and the lower pad 210 may be continuous in the second horizontal direction (e.g., Y-direction), and the contact between the upper pad 220 and the top pad 350 may be continuous in the second horizontal direction (e.g., Y-direction). The lower surface of the upper pad 220 may be in close contact with the upper surface of the lower pad 210 so that no gap is formed between the upper pad 220 and the lower pad 210. The upper surface of the upper pad 220 may be in close contact with the top pad 350 so that no gap is formed between the upper pad 220 and the top pad 350.

In exemplary embodiments, the width of the upper pad 220 may differ from the width of the lower pad 210. Here, the width of the upper pad 220 and the width of the lower pad 210 may each refer to the length along a first horizontal direction (e.g., X-direction). In exemplary embodiments, the width of the upper pad 220 may be greater than the width of the lower pad 210. When the width of the upper pad 220 is greater than the width of the lower pad 210, the contact area between the upper pad 220 and the top pad 350 may be increased, and the hermeticity between the upper pad 220 and the top pad 350 may be improved.

In some exemplary embodiments, the upper pad 220 and the lower pad 210 may include the same material. In some exemplary embodiments, the upper pad 220 and the lower pad 210 may include different materials. In exemplary embodiments, the upper pad 220 and the lower pad 210 may each include polyurethane, silicon, or a combination thereof.

In exemplary embodiments, the upper pad 220 may be attached to the top pad 350. In exemplary embodiments, the upper pad 220 may be attached to the top pad 350 by an adhesive member, such as double-sided tape, interposed between the upper surface of the upper pad 220 and the top pad 350. In exemplary embodiments, the upper pad 220 may be attached to the lower pad 210. In exemplary embodiments, the upper pad 220 may be attached to the lower pad 210 by an adhesive member, such as double-sided tape, interposed between the lower surface of the upper pad 220 and the upper surface of the lower pad 210.

In exemplary embodiments, the upper pad 220 and the lower pad 210 each possess a certain level of elasticity or higher, and the side pad 200A can be pressed against the top pad 350 by the restoring force of the upper pad 220 and the restoring force of the lower pad 210.

### (Fourth embodiment)

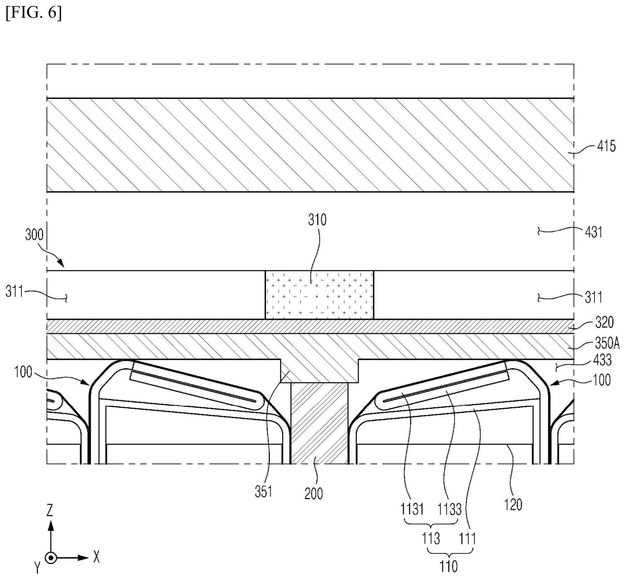

FIG. 6 is a cross-sectional view showing a portion of a battery device according to exemplary embodiments of the present disclosure. Herein, the battery device shown in FIG. 6 will be described, focusing on the differences from the battery device 500 described with reference to FIGS. 1 and 2.

Referring to FIG. 6, the top pad 350A may include a protruding part 351 protruding toward the side pad 200. The protruding part 351 of the top pad 350A may extend in a second horizontal direction (e.g., Y-direction). The bottom surface of the protruding part 351 of the top pad 350A may contact the upper surface of the side pad 200. The contact between the protruding part 351 of the top pad 350A and the side pad 200 may be continuous in the second horizontal direction (e.g., Y-direction).

### (Fifth embodiment)

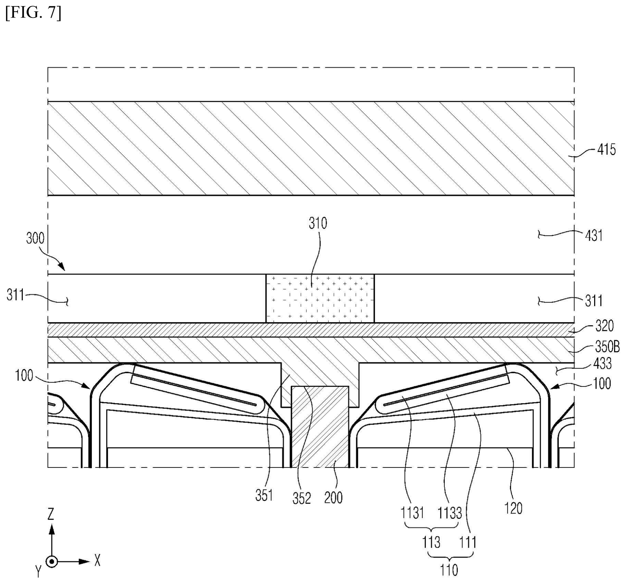

FIG. 7 is a cross-sectional view showing a portion of a battery device according to exemplary embodiments of the present disclosure. Hereinafter, the battery device shown in FIG. 7 will be described, focusing on the differences from the battery device described with reference to FIG. 6.

Referring to FIG. 7, the top pad 350B may include a groove 352 into which the side pad 200 is inserted. The upper part of the side pad 200 may be inserted into the groove 352 provided on the lower surface of the top pad 350B. As the side pad 200 is inserted into the groove 352 of the top pad 350B, assembly and alignment between the side pad 200 and the top pad 350B become easier, and the structural safety between the side pad 200 and the top pad 350B can be improved.

The present disclosure has been described in detail above with reference to the drawings and embodiments. However, the configurations described in the drawings or embodiments of the present specification are merely one embodiment of the present disclosure and do not represent all of the technical ideas of the present disclosure. Therefore, it should be understood that various equivalents and modifications may be made to the present disclosure at the time of filing this application.

## Claims

1. A battery device comprising:
a housing comprising a base frame and a top frame;
a plurality of battery cells disposed on the base frame;
a top pad covering the plurality of battery cells and contacting the plurality of battery cells; and
a flame-retardant cover attached onto the top pad and spaced apart from the top frame with a venting space in between.

2. The battery device of claim 1, wherein
the flame-retardant cover comprises a support frame comprising a plurality of venting holes, wherein
the top pad covers the plurality of venting holes of the support frame.

3. The battery device of claim 2, wherein
the flame-retardant cover further comprises a thermal barrier sheet coupled to the support frame to cover the plurality of venting holes of the support frame.

4. The battery device of claim 3, wherein
the thermal barrier sheet is interposed between the support frame and the top pad.

5. The battery device of claim 1, wherein
the top pad comprises silicon or polyurethane.

6. The battery device of claim 1, wherein
the plurality of battery cells each comprises a cell case comprising a main body part accommodating an electrode assembly and a sealing part extending from the main body part, wherein
the top pad contacts the sealing part of the cell case of each of the plurality of battery cells.

7. The battery device of claim 1, wherein
the housing further comprises a pair of inner walls spaced apart and the plurality of battery cells are located between the pair of inner walls, wherein
the flame-retardant cover is coupled to the pair of inner walls.

8. The battery device of claim 1, wherein
the battery device further comprises a side pad disposed between adjacent battery cells among the plurality of battery cells, wherein
the top pad contacts the side pad.

9. The battery device of claim 8, wherein
the plurality of battery cells is arranged in a first direction, wherein
the contact between the upper surface of the side pad and the top pad is continuous in a second direction intersecting the first direction.

10. The battery device of claim 8, wherein
the side pad comprises:
a lower pad disposed between adjacent battery cells among the plurality of battery cells; and
an upper pad disposed on the lower pad and in contact with the top pad.

11. The battery device of claim 8, wherein
the top pad comprises a protruding part protruding toward the side pad, wherein
the bottom surface of the protruding part of the top pad contacts the upper surface of the side pad.

12. The battery device of claim 8, wherein
the top pad comprises a groove into which the side pad is inserted.

13. The battery device of claim 8, wherein
the material of the top pad and the material of the side pad are the same.

14. The battery device of claim 1, wherein
the base frame comprises a cooling channel configured to allow a cooling fluid to flow.

15. The battery device of claim 1, wherein
the plurality of battery cells is arranged in a first direction, wherein
the housing further comprises a pair of inner walls spaced apart and the plurality of battery cells are located between the pair of inner walls, wherein
the flame-retardant cover comprises:
a support frame coupled to the pair of inner walls and comprising a plurality of venting holes; and
a thermal barrier sheet connected to the support frame to cover the plurality of venting holes in the frame, wherein
the top pad is attached to the flame-retardant cover to cover the plurality of venting holes in the support frame.
